# FASCICULE DE BREVET EUROPEEN

(11) **EP 1 554 224 B1**
(45) Date de publication et mention de la délivrance du brevet: **03.01.2007**
(21) Numéro de dépôt: 03807881.2
(22) Date de dépôt: 08.10.2003
(51) Int. Cl.: C03B 23/035, C03B 23/025

(54) **PROCEDE ET MACHINE D'OBTENTION DE FEUILLES DE VERRE BOMBEES DISSYMETRIQUES**
VERFAHREN UND MASCHINE ZUR HERSTELLUNG VON ASYMMETRISCHEN KONVEXEN GLASSCHEIBEN
METHOD AND MACHINE FOR OBTAINING ASYMMETRIC CONVEX GLASS SHEETS

(30) Priorité: 10.10.2002 FR 0212577
(43) Date de publication de la demande: 20.07.2005
(73) Titulaire: SAINT-GOBAIN GLASS FRANCE, 92400 Courbevoie (FR)
(72) Inventeur: LECLERCQ, Jacques, F-80240 Roisel (FR); RIEDINGER, Jean-Luc, F-60150 Villers Sur Coudun (FR); GARNIER, Gilles, F-60420 Dompierre (FR)
(74) Mandataire: Colombier, Christian
(86) Numéro de dépôt international: PCT/FR2003/002959
(87) Numéro de publication internationale: WO 2004/033381

(56) Documents cités:
- EP-A- 0 298 426
- EP-A- 0 471 620
- EP-A- 0 838 438
- PATENT ABSTRACTS OF JAPAN vol. 2000, no. 19, 5 juin 2001 (2001-06-05) & JP 2001 039724 A (CENTRAL GLASS CO LTD), 13 février 2001 (2001-02-13)
- PATENT ABSTRACTS OF JAPAN vol. 2000, no. 23, 10 février 2001 (2001-02-10) & JP 2001 158631 A (CENTRAL GLASS CO LTD), 12 juin 2001 (2001-06-12)

## Description

La présente invention concerne les techniques d'obtention de feuilles de verre bombées et éventuellement trempées thermiquement, que les feuilles soient bombées selon des formes cylindriques ou des formes complexes non cylindriques.

Plus particulièrement, l'invention concerne celles de ces techniques dans lesquelles les feuilles de verre sont amenées à défiler sur au moins un lit de conformation constitué par des tiges conformatrices, par exemple des éléments tournants disposés selon un trajet à profil courbe dans la direction du défilement des feuilles de verre.

L'invention s'applique par exemple à la réalisation de vitrages automobiles, par exemple du type vitres latérales.

De telles techniques de bombage sont actuellement mises en oeuvre avec des cadences de production très grandes dues notamment à la possibilité de faire suivre des feuilles de verre espacées les unes des autres de quelques centimètres seulement. Elles permettent une très grande reproductibilité du galbe et de la qualité optique des vitrages finals.

Toutefois, les formes de ces feuilles bombées deviennent de plus en plus complexes.

Certes il est possible de jouer sur la forme des tiges conformatrices utilisées pour constituer le lit de conformation pour le bombage. Toutefois, cela nécessite de construire, à chaque nouvelle série de feuilles de verre bombées, un nouveau lit de conformation avec un montage long et précis des nouvelles tiges conformatrices, alors même que les modifications à apporter à un galbage sont de l'ordre de quelques 1/10 de millimètre à quelques millimètres.

Pour résoudre cette difficulté, la présente invention propose un perfectionnement aux procédés et machines de bombage actuels, ledit perfectionnement consistant en un soufflage continu d'air de façon dissymétrique sur les feuilles de verre dans des conditions aptes à influencer la concavité finale de la feuille par rapport à un bombage traditionnel sans ce soufflage dissymétrique.

Le EP-A-0 471 620 décrit un procédé de bombage selon lequel des feuilles de verre défilent jusqu'à se trouver placées sous une forme pleine de bombage. Les feuilles sont ensuite soulevées par un courant ascendant chaud, avec soufflage supplémentaire de gaz chaud au niveau de lignes de pliure, pour augmenter la viscosité du verre en bordure afin de mieux le plaquer contre la forme de bombage, le pressage par le cadre annulaire qui fait suite à ce moulage n'étant plus qu'un pressage de finition. Le soufflage supplémentaire de gaz ne vise pas à influencer la concavité par rapport à ce qu'aurait donné le bombage final sans le soufflage. Ce document n'enseigne pas de soufflage pendant le défilement des feuilles.

Le EP-A-0 298 426 décrit un bombage par application d'une feuille de verre chauffée contre la surface cintrée d'un moule, la feuille étant soulevée par de l'air soufflé par des buses et aspirée par un système. La feuille reçoit ainsi sa forme générale et le bombage est terminé sur les côtés où la courbure est plus forte par un autre soufflage par le système.

Le EP-A-0 838 438 décrit un bombage obtenu par enroulement d'une feuille de verre chauffée sur une surface de moulage rigide, l'élément de pressage de la feuille de verre contre cette surface étant un diaphragme flexible pressurisé par du fluide.

Patent Abstracts of Japan vol 2000, n°19, 5 juin 2001 (JP 2001 039724 A) et Patent Abstracts of Japan vol 2000, n°23, 10 février 2001 (JP 2001 158631 A) décrivent le moulage d'une plaque de verre sur la surface inférieure d'un moule, les buses soufflant de l'air pour soulever la feuille de verre étant disposées et orientées pour rendre uniforme la distribution des jets d'air sur le verre.

La présente invention a donc d'abord pour objet un procédé de fabrication de feuilles de verre bombées suivant lequel on fait défiler des feuilles de verre sur au moins un lit de conformation pour le bombage selon un trajet à profil courbe dans la direction du défilement desdites feuilles, lesdites feuilles de verre ayant été au préalable amenées à leur température de ramollissement en leur conférant progressivement la forme bombée souhaitée, caractérisé par le fait qu'entre la phase initiale du bombage dans laquelle la feuille commence à prendre sa forme et la phase finale dudit bombage, on effectue, en un emplacement de la ligne de défilement des feuilles, un soufflage d'air en continu sur au moins une face des feuilles de verre en défilement, dans des conditions capables d'influencer de façon dissymétrique la concavité finale des feuilles de verre bombées par rapport à ce qu'aurait donné le bombage final sans ledit soufflage.

Conformément à un premier mode de réalisation, on conduit le soufflage d'air sur une seule face des feuilles de verre sur au moins une région transversale de celles-ci par rapport à l'axe de défilement. On peut ainsi effectuer le soufflage d'un seul côté par rapport à l'axe de défilement, ou encore effectuer le soufflage sur toute la région transversale des feuilles de verre par rapport à l'axe de défilement.

Conformément à un second mode de réalisation, on conduit le soufflage d'air sur les deux faces des feuilles de verre, ledit soufflage n'étant pas conduit sur toute la région transversale des feuilles de verre sur au moins l'une des faces. On peut ainsi conduire le soufflage d'air de part et d'autre des feuilles de verre en défilement et d'un seul côté par rapport à l'axe de défilement.

Conformément au procédé selon l'invention, on peut souffler de l'air suffisamment froid ou suffisamment chaud par rapport à la température de bombage pour que le soufflage ait une influence sur le bombage final.

On peut souffler de l'air à une température différente de la température à laquelle est réalisé le bombage afin de donner davantage de concavité d'un côté de la feuille de verre. Si le soufflage tend à faire baisser la température de la face de la feuille de verre recevant ledit soufflage, la concavité sera augmentée de l'autre côté de la feuille, c'est-à-dire du côté n'ayant pas reçu ledit soufflage, en comparaison avec la concavité obtenue en l'absence dudit soufflage. Si le soufflage tend à faire augmenter la température de la face de la feuille de verre recevant ledit soufflage, la concavité sera localement augmentée du côté ayant reçu ledit soufflage, en comparaison avec la concavité obtenue en l'absence dudit soufflage. Selon l'invention, on souffle de l'air à une température différente de la température à laquelle est réalisée le bombage, le soufflage produisant une augmentation de concavité du côté de la face le recevant si le soufflage produit un réchauffement, le soufflage produisant une diminution de concavité du côté de la face le recevant si le soufflage produit un refroidissement.

Comme en général, avant de recevoir le soufflage, les deux faces de la feuille ont sensiblement la même température, en général, la concavité est augmentée par le soufflage du côté de la face du verre la plus chaude.

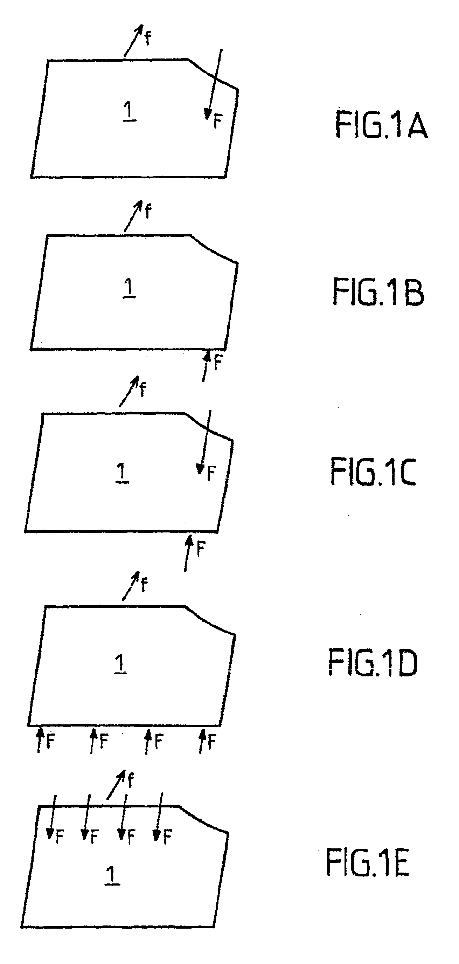

La concavité est augmentée dans toutes les directions du côté de la face du verre ayant sa concavité augmentée, c'est-à-dire à la fois dans le sens du défilement et dans le plan perpendiculaire au sens de défilement. Cet effet est observable aux endroits ayant reçu le soufflage. Seule une partie de la feuille peut donc être concernée par cet effet (cas des figures 1A, 1B, 1C).

On conduit avantageusement ledit soufflage en adressant de l'air sur les feuilles de verre à une pression de 4,90 x 10³ à 9,81 x 10³ Pa (500 à 1000 mm de colonne d'eau) .

Le procédé selon l'invention conduit notamment à des feuilles de verre bombées présentant des variations de cote de 2/10 mm à 2 mm par rapport à un bombage sans soufflage.

Conformément à d'autres caractéristiques du procédé de l'invention :
- on effectue le bombage avec un rayon de courbure d'une ligne parallèle au sens de défilement de 1 mètre à l'infini et un rayon de courbure d'une ligne perpendiculaire au sens de défilement de 5 mètres à l'infini ;
- on fait défiler des feuilles de verre qui ont pris leur forme à une température de 600 à 700°C.

Dans un mode de réalisation particulier préféré, on fait défiler des feuilles de verre suivant une trajectoire plane dans un four de réchauffage pour les amener à température de ramollissement, puis suivant une trajectoire à profil courbe, tangente à la trajectoire plane précitée sur un lit de conformation constitué par des tiges conformatrices, le soufflage étant conduit en un emplacement situé le long de la trajectoire à profil courbe après que les feuilles aient commencé à prendre leur forme.

On peut aussi donner la forme aux feuilles de verre en pratiquant un bombage par effondrement, puis poursuivre le bombage suivant une trajectoire à profil courbe sur un lit de conformation constitué par des tiges conformatrices, le soufflage étant conduit le long de ladite trajectoire à profil courbe.

On peut également faire subir une trempe aux feuilles de verre en aval du soufflage et avant la fin du bombage. En particulier, on peut conduire la trempe en adressant de l'air à une pression de 2,94 x 10⁴ Pa à 3,43 x 10⁴ Pa (3000 à 3500 mm de colonne d'eau).

La présente invention porte également sur des feuilles de verre bombées obtenues ou susceptibles d'être obtenues par le procédé tel que défini ci-dessus ; et sur des feuilles de verre bombées présentant une dissymétrie susceptible d'être détectée en polariscopie ou par des mesures de contrainte faisant appel à des techniques utilisant un épibiascope (éventuellement également un stratoréfractomètre ou un biasographe). En effet, le soufflage exercé en continu et de façon dissymétrique sur les feuilles défilants peut produire des traces parallèles au sens de défilement, plus particulièrement dans les cas illustrés par les figures 1a, 1b, 1c. Ainsi, l'invention concerne notamment une feuille de verre bombée présentant au moins une ligne droite détectable en polariscopie ou au biasographe, sensiblement parallèle à l'un des bords de la feuille et plus proche de ce bord que de l'autre bord qui lui est sensiblement parallèle (du fait de la dissymétrie par rapport à l'axe de défilement dans le cas des figures 1a, 1b, 1c).

La présente invention porte enfin sur une machine de bombage de feuilles de verre comportant des moyens pour faire défiler des feuilles de verre qui ont été au préalable amenées à leur température de ramollissement en leur conférant la forme bombée souhaitée, caractérisée par le fait qu'elle comporte en outre au moins une buse de soufflage d'air en continu, disposée en un emplacement de la ligne de défilement des feuilles après que les feuilles aient commencé à prendre leur forme et avant la phase finale dudit bombage, la ou les buses étant disposées pour réaliser un soufflage d'air dissymétrique sur lesdites feuilles, et réglées pour que ledit soufflage d'air influence la concavité finale des feuilles de verre bombées par rapport à ce qu'aurait donné le bombage final sans ledit soufflage.

La machine de bombage selon l'invention comporte avantageusement un lit de conformation constitué par des tiges conformatrices selon un trajet à profil courbe, la ou les buses de soufflage dissymétrique étant dirigées entre deux tiges conformatrices voisines du lit de conformation.

Elle peut aussi comporter en outre des caissons de soufflage de trempe en aval de la ou des buses de soufflage dissymétrique, lesdits caissons de soufflage de trempe comportant chacun des buses disposées en barrettes et dirigées entre deux tiges conformatrices voisines du lit de conformation.

Pour mieux illustrer le procédé et la machine selon la présente invention, on va maintenant en décrire, à titre indicatif et non limitatif, plusieurs modes de réalisation particuliers avec référence au dessin annexé sur lequel :
- les Figures 1A à 1E sont des schémas illustrant diverses variantes de soufflage dissymétrique selon la présente invention ;
- les Figures 2A et 2B sont des représentations schématiques respectivement en perspective et de dessus d'une feuille de verre défilant sur les tiges conformatrices d'un lit de conformation, au moment où ladite feuille passe sous une buse de soufflage dissymétrique selon la variante de la Figure 1A ;
- la Figure 3 est une vue schématique de profil d'une machine de bombage de feuilles de verre, montrant la trajectoire à profil courbe de ces dernières ;
- les Figures 4A à 4D montrent chacune, en perspective et schématiquement, une variante de tige conformatrice ; et
- la Figure 5 montre, en perspective et schématiquement, deux barrettes en regard de buses de trempe de la machine de bombage.

Sur chacune des Figures 1A à 1E, on a représenté de façon schématique une feuille de verre 1 découpée en vue de la réalisation d'une vitre latérale d'automobile, et on a symbolisé par la flèche f son axe de défilement sur la ligne de bombage.

Selon l'invention, on réalise un soufflage dissymétrique d'air chaud ou froid (symbolisé par les flèches F) sur la feuille 1 en défilement avant le bombage final, par exemple par le dessus de la feuille 1 et d'un côté (Figure 1A), par le dessous de la feuille 1 et d'un côté (Figure 1B), à la fois par le dessus et le dessous de la feuille 1 et du même côté (Figure 1C), par le dessous de la feuille 1 et sur toute la région transversale de celle-ci (Figure 1D), ou encore par le dessus de la feuille 1 et sur toute la région transversale de celle-ci (Figure 1E).

Lorsque l'on souffle de l'air à une température différente de la température à laquelle est réalisé le bombage, on modifie la concavité comme précédemment expliqué, non seulement en ce qui concerne la concavité dans le sens du défilement, mais aussi en ce qui concerne la concavité dans le plan perpendiculaire au sens de défilement.

Dans le cas des Figures 1A à 1C, le soufflage dissymétrique permettra de modifier le bombage d'un côté de la vitre, un tel procédé s'appliquant avantageusement à la fabrication d'une vitre latérale avant d'une voiture qui est plus galbée à l'arrière qu'à l'avant.

Il y a cependant lieu de souligner que le soufflage dissymétrique n'empêche pas d'utiliser simultanément d'autres moyens pour parvenir à la forme finale souhaitée, telle que la forme des tiges conformatrices comme cela sera décrit plus loin.

Le soufflage dissymétrique selon l'invention apparaît alors comme un moyen supplémentaire de réglage de la forme finale recherchée pour la feuille bombée.

En pratique, on préfère la variante de la Figure 1A avec soufflage d'air froid (par rapport à la température de bombage).

Dans le cas des variantes des Figures 1D et 1E, on influence le bombage sur toute la région transversale de la feuille en défilement, ce qui présente une utilité notamment lorsque l'on fabrique des séries de feuilles bombées de formes différentes. Comme indiqué ci-dessus, le soufflage dissymétrique est un moyen de réglage simple, évitant de reconstruire la ligne de bombage.

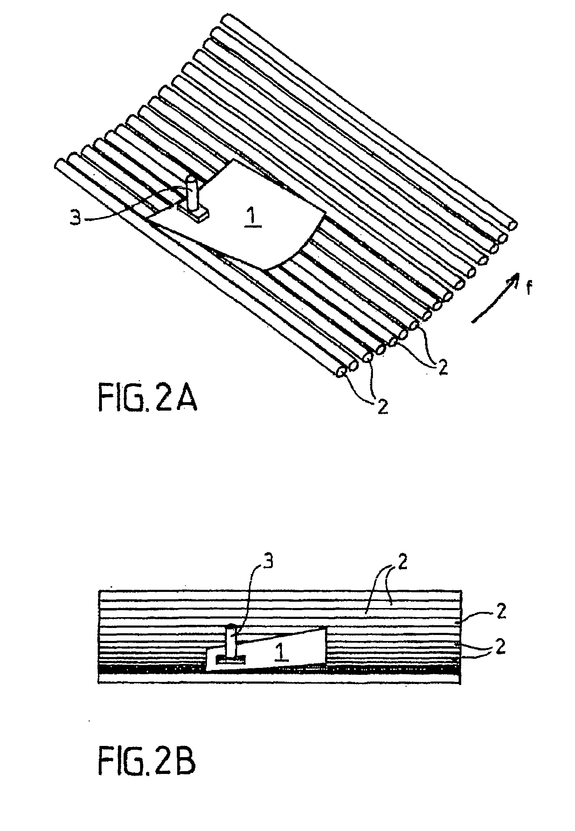

Les Figures 2A et 2B montrent une feuille 1 se déplaçant sur des tiges conformatrices cylindriques 2, avec l'emplacement d'une buse 3 de soufflage dissymétrique selon l'invention.

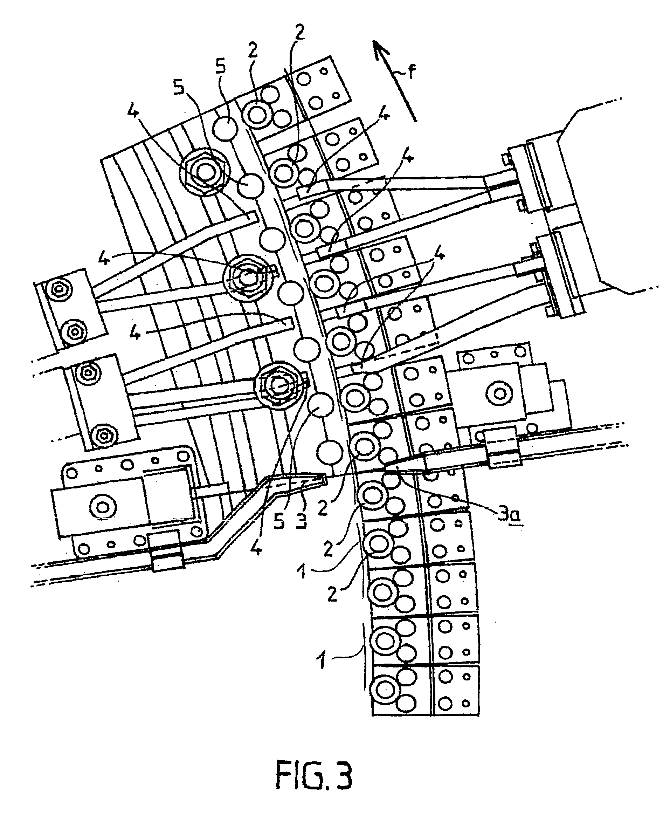

La Figure 3 représente une machine de bombage comportant, de façon connue, un convoyeur formant un lit de conformation et constitué par des tiges conformatrices 2, qui sont des éléments cylindriques tournants disposés selon un trajet à profil courbe, en pratique un profil circulaire avec une concavité tournée vers le haut.

Le convoyeur prolonge en fait sans cassure le chemin suivi par les feuilles de verre chauffées à la température de ramollissement dans un four de réchauffage. Autrement dit, le lit de conformation est tangent à la trajectoire plane d'arrivée des feuilles de verre sur ce lit.

Dans ce dernier, la trajectoire suivie par les feuilles de verre est cylindrique, les génératrices du cylindre étant horizontales et perpendiculaires à la direction d'amenée à plat du verre. Le rayon du cylindre sur lequel s'appuie la trajectoire de la feuille de verre correspond au rayon de courbure conférée à la feuille de verre dans la direction parallèle à la direction de défilement.

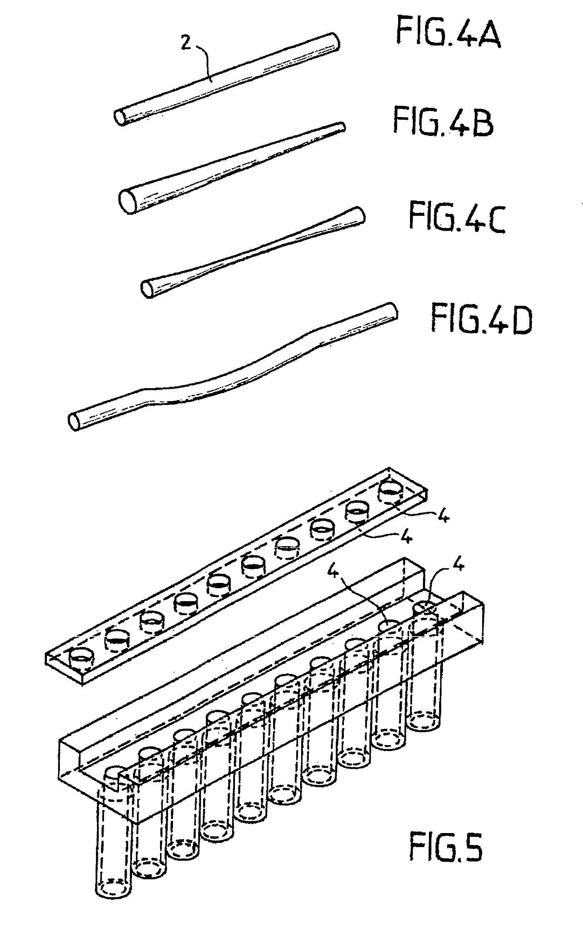

Avec des éléments tournants constitués par des tiges droites, on obtient un cylindre droit (Fig. 4 A). D'autres formes de révolution sont obtenues en substituant aux tiges droites, des tiges coniques (Fig. 4B), toriques (Fig. 4C) ou en forme de guidon (Figures 4D). Ces autres formes impliquent l'emploi de contre-rouleaux supérieurs.

Selon l'invention, on effectue un soufflage d'air sur un côté de la feuille (cf. Figures 2A et 2B) par la buse supérieure 3 qui adresse de l'air à la température choisie entre deux tiges de conformation 2. Sur la Figure 3, on a également représenté une buse de soufflage inférieure 3a qui pourrait être omise et qui pourrait être mise en service à la place de la buse 3 pour la réalisation selon la Figure 1B ou en même temps que celle-ci pour la réalisation de la Figure 1C.

Les buses 3 et 3a de soufflage dissymétrique sont disposées en amont d'une zone terminale de bombage dans laquelle est effectuée de façon connue une trempe thermique, pour laquelle des buses 4 de soufflage d'air froid sont disposées suivant quatre barrettes inférieures et quatre barrettes supérieures en regard sur toute la largeur de la machine de bombage.

Suivant le cas, on peut ne mettre en service qu'une seule des deux buses de soufflage dissymétrique (3 ou 3a). On peut également mettre en service les deux buses 3 et 3a simultanément (cas de la Figure 1C).

Des moyens de maintien supérieurs de type contre-rouleaux 5 sont disposés dans la zone de bombage-trempe en aval des buses 3. Les buses inférieures 4 sont dirigées entre deux tiges conformatrices 2, et les buses supérieures 4 sont dirigées entre deux contre-rouleaux 5.

On remarque que les buses dissymétriques 3, 3a sont placées juste avant le premier contre-rouleau supérieur 5.

Les feuilles de verre sont amenées à défiler à une vitesse élevée au moins égale à 10cm/s et de préférence de l'ordre de 15 à 18 cm/s, et elles acquièrent alors le profil correspondant au lit de conformation sous l'effet combiné de la gravité et de la vitesse en amont des buses 3a, et avec en plus l'appui des contre-rouleaux 5 dans la zone de bombage-trempe.

Pour des feuilles de verre de 3 mm d'épaisseur, les tiges conformatrices sont typiquement espacées de 50 à 100 mm.

## Revendications

1. - Procédé de fabrication de feuilles de verre bombées suivant lequel on fait défiler des feuilles de verre sur au moins un lit de conformation pour le bombage selon un trajet à profil courbe dans la direction du défilement desdites feuilles, lesdites feuilles de verre ayant été au préalable amenées à leur température de ramollissement, en leur conférant progressivement la forme bombée souhaitée, **caractérisé par le fait qu'**entre la phase initiale du bombage dans laquelle la feuille commence à prendre sa forme et la phase finale dudit bombage, on effectue, en un emplacement de la ligne de défilement des feuilles, un soufflage d'air en continu sur au moins une face des feuilles de verre en défilement, dans des conditions capables d'influencer de façon dissymétrique la concavité finale des feuilles de verre bombées par rapport à ce qu'aurait donné le bombage final sans ledit soufflage.

2. - Procédé selon la revendication 1, **caractérisé par le fait que** l'on conduit le soufflage d'air sur une seule face des feuilles de verre sur au moins une région transversale de celles-ci par rapport à l'axe de défilement.

3. - Procédé selon la revendication 2, **caractérisé par le fait que** l'on effectue le soufflage d'un seul côté par rapport à l'axe de défilement.

4. - Procédé selon la revendication 2, **caractérisé par le fait que** l'on effectue le soufflage sur toute la région transversale des feuilles de verre par rapport à l'axe de défilement.

5. - Procédé selon la revendication 1, **caractérisé par le fait que** l'on conduit le soufflage d'air sur les deux faces des feuilles de verre, ledit soufflage n'étant pas conduit sur toute la région transversale des feuilles de verre sur au moins l'une des faces.

6. - Procédé selon la revendication 5, **caractérisé par le fait que** l'on conduit le soufflage d'air de part et d'autre des feuilles de verre en défilement et d'un seul côté par rapport à l'axe de défilement.

7. - Procédé selon l'une des revendications 1 à 6, **caractérisé par le fait que** l'on souffle de l'air suffisamment froid par rapport à la température de bombage pour que le soufflage ait une influence sur le bombage final.

8. - Procédé selon l'une des revendications 1 à 6, **caractérisé par le fait que** l'on souffle de l'air suffisamment chaud par rapport à la température de bombage pour que le soufflage ait une influence sur le bombage final.

9. - Procédé selon l'une des revendications 1 à 8, **caractérisé par le fait que** l'on souffle de l'air à une température différente de la température à laquelle est réalisée le bombage, le soufflage produisant une augmentation de concavité du côté de la face le recevant si le soufflage produit un réchauffement, le soufflage produisant une diminution de concavité du côté de la face le recevant si le soufflage produit un refroidissement.

10. - Procédé selon l'une des revendications 1 à 9, **caractérisé par le fait que** l'on souffle de l'air à une température différente de celle à laquelle est réalisé le bombage afin de donner davantage de concavité dans le plan perpendiculaire au sens de défilement.

11. - Procédé selon l'une des revendications 1 à 10, **caractérisé par le fait que** l'on conduit le soufflage en adressant de l'air sur les feuilles de verre à une pression de 4,90 x 10³ à 9,81 x 10³ Pa (500 à 1000 mm de colonne d'eau).

12. - Procédé selon l'une des revendications 1 à 11, **caractérisé par le fait qu'**il conduit à des feuilles de verre bombées présentant des variations de cote de 2/10 mm à 2 mm par rapport à un bombage sans soufflage.

13. - Procédé selon l'une des revendications 1 à 12, **caractérisé par le fait que** l'on effectue le bombage avec un rayon de courbure d'une ligne parallèle au sens de défilement de 1 mètre à l'infini et un rayon de courbure d'une ligne perpendiculaire au sens de défilement de 5 mètres à l'infini.

14. - Procédé selon l'une des revendications 1 à 13, **caractérisé par le fait que** l'on fait défiler des feuilles de verre qui ont pris leur forme à une température de 600 à 700°C.

15. - Procédé selon l'une des revendications 1 à 14, **caractérisé par le fait que** l'on fait défiler des feuilles de verre suivant une trajectoire plane dans un four de réchauffage pour les amener à température de ramollissement, puis suivant une trajectoire à profil courbe, tangente à la trajectoire plane précitée sur un lit de conformation constitué par des tiges conformatrices, le soufflage étant conduit en un emplacement situé le long de la trajectoire à profil courbe après que les feuilles aient commencé à prendre leur forme.

16. - Procédé selon l'une des revendications 1 à 15, **caractérisé par le fait que** l'on donne la forme aux feuilles de verre en pratiquant .un bombage par effondrement, puis on poursuit le bombage suivant une trajectoire à profil courbe sur un lit de conformation constitué par des tiges conformatrices, le soufflage étant conduit le long de ladite trajectoire à profil courbe.

17. - Procédé selon l'une des revendications 1 à 16, **caractérisé par le fait que** l'on fait subir une trempe aux feuilles de verre en aval du soufflage et avant la fin du bombage.

18. - Procédé selon la revendication 17, **caractérisé par le fait que** l'on conduit la trempe en adressant de l'air à une pression de 2,94 x 10⁴ Pa à 3,43 x 10⁴ Pa (3000 à 3500 mm de colonne d'eau).

19. - Feuilles de verre bombées obtenues ou susceptibles d'être obtenues par le procédé tel que défini à l'une des revendications 1 à 18.

20. - Feuilles de verre bombées présentant une dissymétrie susceptible d'être détectée en polariscopie ou par des mesures de contrainte faisant appel à des techniques utilisant un épibiascope.

21. - Feuilles selon la revendication précédente présentant au moins une ligne droite détectable en polariscopie ou au biasographe, sensiblement parallèle à l'un des bords de la feuille et plus proche de ce bord que de l'autre bord qui lui est sensiblement parallèle.

22. - Machine de bombage de feuilles de verre comportant des moyens pour faire défiler des feuilles de verre (1) qui ont été au préalable amenées à leur température de ramollissement en leur conférant la forme bombée souhaitée, **caractérisée par le fait qu'**elle comporte en outre au moins une buse (3, 3a) de soufflage d'air en continu, disposée en un emplacement de la ligne de défilement des feuilles après que les feuilles aient commencé à prendre leur forme et avant la phase finale dudit bombage, la ou les buses (3 ; 3a) étant disposées pour réaliser un soufflage d'air dissymétrique sur lesdites feuilles (1), et réglées pour que ledit soufflage d'air influence la concavité finale des feuilles de verre bombées par rapport à ce qu'aurait donné le bombage final sans ledit soufflage.

23. - Machine de bombage selon la revendication précédente, **caractérisée par le fait qu'**elle comporte un lit de conformation constitué par des tiges conformatrices (2) selon un trajet à profil courbe, la ou les buses de soufflage dissymétrique étant dirigées entre deux tiges conformatrices voisines (2) du lit de conformation.

24. - Machine de bombage selon l'une des revendications 22 et 23, **caractérisée par le fait qu'**elle comporte en outre des caissons de soufflage de trempe en aval de la ou des buses de soufflage dissymétrique, lesdits caissons de soufflage de trempe comportant chacun des buses (4) disposées en barrettes et dirigées entre deux tiges conformatrices voisines (2) du lit de conformation.

## Claims

1. Method for producing bent glass sheets whereby glass sheets on at least one shaping bed for bending in a trajectory with a curved profile in the direction of movement of said sheets, said glass sheets having been raised beforehand to their softening point, are moved along, progressively giving them the desired bent shape, **characterized in that**, between the initial bending phase in which the sheet begins to adopt its shape and the final phase of said bending, continuous blowing of air is performed, at a place along the line along which the sheets move, onto at least one face of the moving glass sheets, under conditions capable of asymmetrically influencing the final concavity of the bent glass sheets by comparison with the concavity that the final bending would have given without said blowing.

2. Method according to Claim 1, **characterized in that** the blowing of air onto just one face of the glass sheets is performed in at least one transverse region of these sheets with respect to the axis along which they move.

3. Method according to Claim 2, **characterized in that** the blowing is performed on just one side with respect to the axis along which they move.

4. Method according to Claim 2, **characterized in that** the blowing is performed across the entire transverse region of the glass sheets with respect to the axis along which they move.

5. Method according to Claim 1, **characterized in that** the blowing of air is performed onto both faces of the glass sheets, said blowing not being performed across the entire transverse region of the glass sheets on at least one of the faces.

6. Method according to Claim 5, **characterized in that** the blowing of air is performed on each side of the glass sheets as they move along and on just one side with respect to the axis along which they move.

7. Method according to one of Claims 1 to 6, **characterized in that** the air blown is cold enough with respect to the bending temperature for the blowing to have an influence on the final bending.

8. Method according to one of Claims 1 to 6, **characterized in that** the air blown is hot enough with respect to the bending temperature for the blowing to have an influence on the final bending.

9. Method according to one of Claims 1 to 8, **characterized in that** air is blown at a temperature other than the temperature at which bending is carried out, the blowing producing an increase in concavity on the same side as the face receiving it if the blowing causes heating, the blowing producing a reduction in concavity on the same side of the face receiving it if the blowing produces cooling.

10. Method according to one of Claims 1 to 9, **characterized in that** air is blown at a temperature other than the temperature at which bending is carried out so as to give further concavity in the plane perpendicular to the direction of travel.

11. Method according to one of Claims 1 to 10, **characterized in that** the blowing is performed by directing air onto the glass sheets at a pressure ranging from 4.90 x 10³ to 9.81 x 10³ Pa (500 to 1000 mm water column).

12. Method according to one of Claims 1 to 11, **characterized in that** it leads to bent glass sheets exhibiting variations in dimension ranging from 2/10 mm to 2 mm with respect to bending without blowing.

13. Method according to one of Claims 1 to 12, **characterized in that** the bending is performed with a radius of curvature of a line parallel to the direction of travel ranging from 1 metre to infinity and a radius of curvature of a line perpendicular to the direction of travel ranging from 5 metres to infinity.

14. Method according to one of Claims 1 to 13, **characterized in that** glass sheets which have taken shape at a temperature of 600 to 700°C are moved along.

15. Method according to one of Claims 1 to 14, **characterized in that** sheets of glass are moved along in a planar trajectory through a reheat furnace in order to bring them to the softening point, then in a trajectory with a curved profile tangential to the aforementioned planar trajectory over a shaping bed consisting of shaping rods, the blowing being performed at a place situated along the curved-profile trajectory after the sheets have begun to take shape.

16. Method according to one of Claims 1 to 15, **characterized in that** the shape is given to the glass sheets by performing sag bending, then bending is continued in a trajectory with a curved profile over a shaping bed consisting of shaping rods, blowing being performed along said curved-profile trajectory.

17. Method according to one of Claims 1 to 16, **characterized in that** the glass sheets are subjected to toughening downstream of the blowing operation and before the end of the bending.

18. Method according to Claim 17, **characterized in that** the toughening is performed by directing air at a pressure ranging from 2.94 x 10⁴ Pa to 3.43 x 10⁴ Pa (3000 to 3500 mm water column).

19. Bent glass sheets obtained or likely to be obtained by the method as defined in one of Claims 1 to 18

20. Bent glass sheets exhibiting asymmetry likely to be detected by polariscopy or by measuring stress by techniques employing an epibiascope.

21. Sheets according to the preceding claim exhibiting at least one straight line that can be detected by polariscopy or using a *Biasographe,* more or less parallel to one of the edges of the sheet and closer to this edge than to the other edge more or less parallel to it.

22. Machine for bending glass sheets comprising means for moving along glass sheets (1) which have been raised beforehand to their softening point, giving them the desired bent shape, **characterized in that** this machine further comprises at least one nozzle (3, 3a) for blowing air continuously, this nozzle being arranged at a place on the line along which the sheets move after the sheets have began to take shape and before the final phase of said bending, the nozzle or nozzles (3; 3a) being arranged in such a way as to blow air asymmetrically onto said sheets (1), and set up so that said air blowing influences the final concavity of the bent glass sheets by comparison with the concavity that the final bending would have given without said blowing.

23. Bending machine according to the preceding claim, **characterized in that** it comprises a shaping bed consisting of shaping rods (2) in a path with a curved profile, the asymmetric blowing nozzle or nozzles being aimed between two adjacent shaping rods (2) of the shaping bed.

24. Bending machine according to either of Claims 22 and 23, **characterized in that** it further comprises blowing plenums for toughening, downstream of the asymmetric blowing nozzle or nozzles, said blowing plenums for toughening each comprising nozzles (4) arranged in arrays and aimed between two adjacent shaping rods (2) of the shaping bed.

## Patentansprüche

1. Verfahren zur Herstellung gebogener Glasscheiben, gemäß welchem zum Biegen die Glasscheiben auf mindestens einem Formgebungsbett mit einer Bahn mit einem in Durchlaufrichtung dieser Scheiben gekrümmten Profil durchlaufen gelassen werden, wobei die Glasscheiben zuvor auf ihre Erweichungstemperatur gebracht worden sind, um ihnen fortschreitend die gewünschte gebogene Form zu verleihen, **dadurch gekennzeichnet, dass** zwischen der Anfangsphase des Biegevorgangs, in welcher die Glasscheibe beginnt, ihre Form anzunehmen, und der Endphase dieses Biegevorgangs an einer Stelle der Durchlauflinie der Glasscheiben kontinuierlich Luft auf mindestens eine Seite der durchlaufenden Glasscheiben unter Bedingungen geblasen wird, die es ermöglichen, die endgültige Konkavität der gebogenen Glasscheiben in Bezug auf diejenige, die ihnen der letzte Biegevorgang ohne diesen Blasvorgang verliehen hätte, asymmetrisch zu beeinflussen.

2. Verfahren nach Anspruch 1, **dadurch gekennzeichnet, dass** das Aufblasen von Luft auf eine einzige Seite der Glasscheiben in mindestens einem in Bezug auf ihre Durchlaufachse quer verlaufenden Bereich durchgeführt wird.

3. Verfahren nach Anspruch 2, **dadurch gekennzeichnet, dass** der Blasvorgang auf einer einzigen Seite in Bezug auf die Durchlaufachse durchgeführt wird.

4. Verfahren nach Anspruch 2, **dadurch gekennzeichnet, dass** der Blasvorgang in dem gesamten in Bezug auf die Durchlaufachse quer verlaufenden Bereich der Glasscheiben durchgeführt wird.

5. Verfahren nach Anspruch 1, **dadurch gekennzeichnet, dass** das Aufblasen von Luft auf beiden Seiten der Glasscheiben durchgeführt wird, wobei es auf mindestens einer Seite nicht in dem gesamten quer verlaufenden Bereich der Glasscheiben durchgeführt wird.

6. Verfahren nach Anspruch 5, **dadurch gekennzeichnet, dass** das Aufblasen von Luft auf beiden Seiten der durchlaufenden Glasscheiben und in Bezug auf die Durchlaufachse auf einer einzigen Seite durchgeführt wird.

7. Verfahren nach einem der Ansprüche 1 bis 6, **dadurch gekennzeichnet, dass** Luft aufgeblasen wird, die in Bezug auf die Biegetemperatur ausreichend kühl ist, damit der Blasvorgang einen Einfluss auf die fertige Biegung hat.

8. Verfahren nach einem der Ansprüche 1 bis 6, **dadurch gekennzeichnet, dass** Luft aufgeblasen wird, die in Bezug auf die Biegetemperatur ausreichend heiß ist, damit der Blasvorgang einen Einfluss auf die fertige Biegung hat.

9. Verfahren nach einem der Ansprüche 1 bis 8, **dadurch gekennzeichnet, dass** Luft mit einer anderen Temperatur als derjenigen, bei welcher das Biegen durchgeführt wird, aufgeblasen wird, wobei der Blasvorgang eine Vergrößerung der Konkavität auf der Seite der Seite, auf welcher er stattfindet, wenn der Blasvorgang eine Erwärmung verursacht, bewirkt und der Blasvorgang eine Verringerung der Konkavität auf der Seite der Seite, auf welcher er stattfindet, wenn der Blasvorgang eine Abkühlung verursacht, bewirkt.

10. Verfahren nach einem der Ansprüche 1 bis 9, **dadurch gekennzeichnet, dass** Luft mit einer anderen Temperatur als derjenigen, bei welcher der Biegevorgang durchgeführt wird, aufgeblasen wird, um die Konkavität in der zur Durchlaufrichtung quer verlaufenden Ebene weiter zu vergrößern.

11. Verfahren nach einem der Ansprüche 1 bis 10, **dadurch gekennzeichnet, dass** der Blasvorgang durchgeführt wird, indem auf die Glasscheiben Luft mit einem Druck von 4,90·10³ bis 9,81·10³ Pa (500 bis 1 000 mm Wassersäule) geschickt wird.

12. Verfahren nach einem der Ansprüche 1 bis 11, **dadurch gekennzeichnet, dass** es zu gebogenen Glasscheiben führt, die eine Höhenveränderung von 2/10 mm bis 2 mm gegenüber einem Biegen ohne Blasvorgang aufweisen.

13. Verfahren nach einem der Ansprüche 1 bis 12, **dadurch gekennzeichnet, dass** der Biegevorgang mit einem Krümmungsradius von 1 Meter bis unendlich von einer zur Durchlaufrichtung parallelen Linie und mit einem Krümmungsradius von 5 Metern bis unendlich in einer zur Durchlaufrichtung quer verlaufenden Linie durchgeführt wird.

14. Verfahren nach einem der Ansprüche 1 bis 13, **dadurch gekennzeichnet, dass** Glasscheiben durchlaufen gelassen werden, die ihre Form bei einer Temperatur von 600 bis 700 °C angenommen haben.

15. Verfahren nach einem der Ansprüche 1 bis 14, **dadurch gekennzeichnet, dass** Glasscheiben, um sie auf Erweichungstemperatur zu bringen, in einer ebenen Bahn durch einen Erwärmungsofen und anschließend in einer Bahn mit gekrümmtem Profil, die sich an die vorige ebene Bahn anschließt, auf einem Formgebungsbett, das aus formgebenden Stäben besteht, durchlaufen gelassen werden, wobei der Blasvorgang an einer Stelle durchgeführt wird, die sich in der Bahn mit gekrümmtem Profil befindet, nachdem die Glasscheiben begonnen haben, ihre Form anzunehmen.

16. Verfahren nach einem der Ansprüche 1 bis 15, **dadurch gekennzeichnet, dass** den Glasscheiben ihre Form verliehen wird, indem ein Biegevorgang durch Absinken-Lassen durchgeführt und anschließend der Biegevorgang in einer Bahn mit gekrümmtem Profil auf einem Formgebungsbett, das aus formgebenden Stäben besteht, fortgesetzt wird, wobei der Blasvorgang in dieser Bahn mit gekrümmtem Profil durchgeführt wird.

17. Verfahren nach einem der Ansprüche 1 bis 16, **dadurch gekennzeichnet, dass** nach dem Blasvorgang und vor dem Ende des Biegevorgangs die Glasscheiben vorgespannt werden.

18. Verfahren nach Anspruch 17, **dadurch gekennzeichnet, dass** das Vorspannen durchgeführt wird, indem Luft mit einem Druck von 2,94·10⁴ Pa bis 3,43·10⁴ Pa (3 000 bis 3 500 mm Wassersäule) aufgeblasen wird.

19. Gebogene Glasscheiben, die durch das in einem der Ansprüche 1 bis 18 definierte Verfahren erhalten worden sind oder erhalten werden können.

20. Gebogene Glasscheiben, die eine Asymmetrie aufweisen, die durch Polariskopie oder durch Spannungsmessungen, für die ein Epibiaskop verwendet wird, nachgewiesen werden kann.

21. Glasscheiben nach dem vorhergehenden Anspruch, die mindestens eine gerade Linie aufweisen, die durch Polariskopie oder mit dem Biasographen nachweisbar ist und im Wesentlichen parallel zu einem der Ränder der Glasscheibe und näher zu diesem Rand als zu dem anderen Rand, der zu diesem im Wesentlichen parallel steht, verläuft.

22. Vorrichtung zum Biegen von Glasscheiben, die Mittel umfasst, um Glasscheiben (1), die zuvor auf Erweichungstemperatur gebracht worden sind, durchlaufen zu lassen, wobei ihnen die gewünschte gebogene Form verliehen wird, **dadurch gekennzeichnet, dass** sie außerdem mindestens eine Düse (3, 3a) für das kontinuierliche Aufblasen von Luft umfasst, die an einer Stelle der Durchlauflinie der Glasscheiben, nachdem die Glasscheiben begonnen haben, ihre Form anzunehmen, und vor der letzten Phase des Biegevorgangs angeordnet ist, wobei die Düse/n (3; 3a) angeordnet ist/sind, um auf die Glasscheiben (1) asymmetrisch Luft zu blasen, und geregelt werden, damit durch dieses Aufblasen von Luft die endgültige Konkavität der gebogenen Glasscheiben in Bezug auf diejenige, die ihnen der letzte Biegevorgang ohne diesen Blasvorgang verleihen würde, beeinflusst wird.

23. Biegevorrichtung nach dem vorhergehenden Anspruch, **dadurch gekennzeichnet, dass** sie ein Formgebungsbett umfasst, das von formgebenden Stäben (2) in einer Bahn mit gekrümmtem Profil gebildet wird, wobei die asymmetrische/n Blasdüse/n zwischen zwei benachbarte Formgebungsstäbe (2) des Formgebungsbetts gerichtet ist/sind.

24. Biegevorrichtung nach Anspruch 22 oder 23, **dadurch gekennzeichnet, dass** sie außerdem Blaskästen für das Vorspannen nach der/den asymmetrischen Blasdüse/n umfasst, wobei die Blaskästen für das Vorspannen jeweils Düsen (4) enthalten, die in Leisten angeordnet und zwischen zwei benachbarte Formgebungsstäbe (2) des Formgebungsbetts gerichtet sind.
